# EUROPEAN PATENT APPLICATION

(11) **EP 4 393 753 A1**
(43) Date of publication of application: **03.07.2024**
(21) Application number: 22913913.4
(22) Date of filing: 22.11.2022
(51) Int. Cl.: B60L 3/12

(54) **USER TYPE IDENTIFICATION METHOD, ELECTRONIC DEVICE, AND READABLE STORAGE MEDIUM**

(30) Priority: 31.12.2021 CN 202111676076
(71) Applicant: BYD Company Limited, Shenzhen, Guangdong 518118 (CN)
(72) Inventor: FENG, Tianyu, Shenzhen, Guangdong 518118 (CN); SHU, Zhan, Shenzhen, Guangdong 518118 (CN); DENG, Linwang, Shenzhen, Guangdong 518118 (CN); SHU, Shiwei, Shenzhen, Guangdong 518118 (CN)
(74) Representative: Dehns Germany Partnerschaft mbB
(86) International application number: PCT/CN2022/133434
(87) International publication number: WO 2023/124655

(57) **Abstract**

Disclosed are a user type identification method, an electronic device, and a readable storage medium. The method includes: obtaining driving data in a preset time period, where the driving data includes at least a driving time, an accumulated driving mileage, and a driving speed in a vehicle driving process; obtaining to-be-analyzed data based on the driving data in the preset time period, where the to-be-analyzed data includes daily driving duration, a daily driving mileage, and a quantity of times of driving at each moment daily; and performing analysis on the to-be-analyzed data through a preset identification model, to obtain a user type.

## Description

### CROSS-REFERENCE TO RELATED APPLICATIONS

The present disclosure claims priority to Chinese Patent Application No. 202111676076.2, filed on December 31, 2021 and entitled "USER TYPE IDENTIFICATION METHOD, ELECTRONIC DEVICE, AND READABLE STORAGE MEDIUM", which is incorporated herein by reference in its entirety.

### FIELD

Embodiments of the present disclosure relate to the field of data processing technologies, and more specifically, to a user type identification method, an electronic device, and a readable storage medium.

### BACKGROUND

With increasing popularity of new energy vehicles, a quantity of users is also increased. Because each user has a different driving habit and driving mode, performance of a power battery of a vehicle is also different. To optimize performance of a battery, a user type needs to be obtained by analyzing driving data of a vehicle, so that a battery management system is customized for a user.

However, when the user type is classified, a processing procedure is complex, and sensitive information such as a driving route of the user needs to be obtained and analyzed, causing a big problem for information security of the user.

### SUMMARY

According to a first aspect of embodiments of the present disclosure, a user type identification method is provided, including:
obtaining driving data in a preset time period, where the driving data includes at least a driving time and an accumulated driving mileage of a vehicle;
obtaining to-be-analyzed data based on the driving data in the preset time period, where the to-be-analyzed data includes driving duration, a driving mileage, and a quantity of times of driving in each time period daily; and
performing analysis on the to-be-analyzed data through a preset identification model, to obtain a user type.

In an embodiment of the present disclosure, the obtaining to-be-analyzed data based on the driving data in the preset time period includes:
extracting daily driving data from the driving data in the preset time period; and
calculating the daily driving data respectively, to obtain the driving duration, the driving mileage, and the quantity of times of driving in each time period daily.

In an embodiment of the present disclosure, an identification result of the user type includes a daytime online car-hailing user type, a night online car-hailing user type, a commuting private vehicle user type, a commercial vehicle user type, and a non-commuting private vehicle user type.

In an embodiment of the present disclosure, the method further includes:
performing visual analysis on vehicle data of a user based on the user type, to obtain a visual analysis result.

In an embodiment of the present disclosure, the vehicle data includes the driving data when the vehicle is in a driving state and non-driving data when the vehicle is in a non-driving state.

In an embodiment of the present disclosure, the method further includes:
performing feature analysis on the vehicle data of the user, to obtain driving habit information of the user.

In an embodiment of the present disclosure, the method further includes:
formulating a control strategy of a corresponding battery management system based on the user type.

In an embodiment of the present disclosure, the performing analysis on the to-be-analyzed data through a preset identification model, to obtain a user type includes:
obtaining a training sample set, where the training sample set includes preprocessed offline vehicle data;
training the identification model based on the training sample set; and
performing analysis on the to-be-analyzed data based on the identification model, to obtain the user type.

In an embodiment of the present disclosure, the method further includes:
updating the to-be-analyzed data and a corresponding analysis result to the training sample set as a training sample after performing analysis on the to-be-analyzed data.

According to a second aspect of the embodiments of the present disclosure, a user type identification apparatus is provided, including:
an obtaining module, configured to obtain driving data in a preset time period, where the driving data includes at least a driving time and an accumulated driving mileage of a vehicle; and obtain to-be-analyzed data based on the driving data in the preset time period, where the to-be-analyzed data includes driving duration, a driving mileage, and a quantity of times of driving in each time period daily; and
an analysis module, configured to perform analysis on the to-be-analyzed data through a preset identification model, to obtain a user type.

In an embodiment of the present disclosure, the analysis module is further configured to perform visual analysis on vehicle data of a user based on the user type, to obtain a visual analysis result.

In an embodiment of the present disclosure, the analysis module is further configured to perform feature analysis on the vehicle data of the user, to obtain driving habit information of the user.

In an embodiment of the present disclosure, the identification apparatus further includes:
a processing module, configured to formulate a control strategy of a corresponding battery management system based on the user type.

In an embodiment of the present disclosure, the obtaining module is further configured to:
obtain a training sample set, where the training sample set includes preprocessed offline vehicle data;
train the identification model based on the training sample set; and
perform analysis on the to-be-analyzed data based on the identification model, to obtain the user type.

According to a third aspect of the embodiments of the present disclosure, an electronic device is provided, including a memory and a processor. The memory is configured to store an executable instruction; and the processor is configured to execute the user type identification method according to any one of the first aspect of the embodiments of the present disclosure under control of the instruction.

According to a fourth aspect of the embodiments of the present disclosure, a readable storage medium is provided, storing a computer program. When executed by a processor, the computer program implements the user type identification method according to any one of the first aspect of the embodiments of the present disclosure.

### BRIEF DESCRIPTION OF THE DRAWINGS

The accompanying drawings are incorporated into and constitute a part of the specification, show embodiments of the present disclosure, and are used for explaining the principle of the present disclosure together with descriptions thereof.
FIG. 1 is a principle block diagram of hardware configuration of an exemplary electronic device;
FIG. 2 is a schematic flowchart of a user type identification method according to an embodiment of the present disclosure;
FIG. 3 is a schematic visual diagram of a user type obtained through a user type identification method according to an embodiment of the present disclosure;
FIG. 4 is a schematic structural diagram of a user type identification apparatus according to an embodiment of the present disclosure; and
FIG. 5 is a schematic diagram of a hardware structure of an exemplary electronic device.

### DETAILED DESCRIPTION

Various exemplary embodiments of the present disclosure are now described in detail with reference to the accompanying drawings. It should be noted that, unless otherwise specified, opposite arrangements, numerical expressions, and numerical values of components and steps described in the embodiments do not limit the scope of the present disclosure.

The following description of at least one exemplary embodiment is merely illustrative, and in no way constitutes any limitation on the present disclosure and an application or use thereof.

Technologies, methods, and devices known to a person of ordinary skill in a related art may not be discussed in detail, but where appropriate, the technologies, methods, and devices should be considered as a part of the specification.

In all examples shown and discussed herein, any specific value should be construed as merely exemplary, and not as a limitation. Therefore, another example of the exemplary embodiment may have a different value.

It should be noted that, a similar reference numeral and letter indicate a similar item in the following accompanying drawings. Therefore, once an item is defined in an accompanying drawing, the item does not need to be further discussed in a subsequent accompanying drawing.

An objective of the embodiments of the present disclosure is to provide a user type identification method, so that information security of a user can be improved when user classification is implemented.

A beneficial effect of the present disclosure is that, driving data in a preset time period is obtained, where the driving data includes at least a driving time, an accumulated driving mileage, and a driving speed in a vehicle driving process; to-be-analyzed data is obtained based on the driving data in the preset time period, where the to-be-analyzed data includes daily driving duration, a daily driving mileage, and a quantity of times of driving at each moment daily; and analysis is performed on the to-be-analyzed data through a preset identification model, to obtain a user type. In the embodiments, the user type is obtained by performing analysis on the daily driving duration, the daily driving mileage, and the quantity of times of driving at each moment daily. Because data used in a calculation process is not related to sensitive privacy data of a user, information security of the user can be improved when user classification is implemented.

### <Hardware configuration>

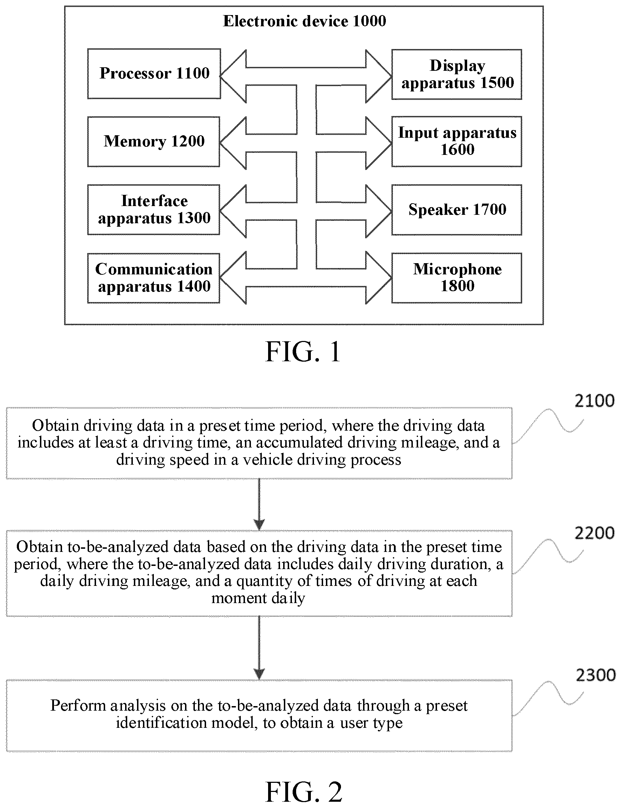

As shown in FIG. 1, an electronic device 1000 that may use a user type identification method of the present disclosure may include a processor 1100, a memory 1200, an interface apparatus 1300, a communication apparatus 1400, a display apparatus 1500, an input apparatus 1600, a speaker 1700, a microphone 1800, and the like.

The processor 1100 may be a mobile version processor. The memory 1200 includes, for example, a ROM (read-only memory), a RAM (random access memory), and a nonvolatile memory such as a hard disk. The interface apparatus 1300 includes, for example, a USB interface and an earphone interface. The communication apparatus 1400 can perform, for example, wired or wireless communication. The communication apparatus 1400 may include a short-range communication apparatus, for example, any device that performs short-range wireless communication based on a short-range wireless communication protocol such as a Hilink protocol, WiFi (an IEEE 802.11 protocol), Mesh, Bluetooth, ZigBee, Thread, Z-Wave, NFC, UWB, and LiFi. The communication apparatus 1400 may also include a remote communication apparatus, for example, any device performing WLAN, GPRS, or 2G/3G/4G/5G remote communication. The display apparatus 1500 is, for example, a liquid crystal display screen or a touch display screen. The input apparatus 1600 may include, for example, a touch screen and a keyboard. The electronic device 1000 may output audio information through the speaker 1700, and may collect audio information through the microphone 1800.

In this embodiment, the memory 1200 of the electronic device 1000 is configured to store an instruction, and the instruction is configured to control the processor 1100 to perform an operation to implement the user type identification method. A technician may design the instruction according to solutions disclosed by the present disclosure. How an instruction controls a processor to perform an operation is well known in the art, and therefore details are not described herein again.

Although multiple apparatuses of the electronic device 1000 are shown in FIG. 1, the present disclosure may only relate to some of the apparatuses therein. For example, the electronic device 1000 only relates to the memory 1200, the processor 1100, the communication apparatus 1400, and the display apparatus 1500.

It should be understood that, although FIG. 1 shows only one electronic device 1000, it does not mean to limit a quantity of electronic devices 1000.

### <Method embodiment>

FIG. 2 is a schematic flowchart of a user type identification method according to an embodiment of the present disclosure.

As shown in FIG. 2, the user type identification method in this embodiment may be specifically performed by the electronic device 1000 shown in FIG. 1.

Specifically, the user type identification method in this embodiment may include the following step 2100 to step 2300.

Step 2100: Driving data in a preset time period is obtained, where the driving data includes at least a driving time, an accumulated driving mileage, and a driving speed in a vehicle driving process.

That vehicle data in a preset time period is obtained may be obtaining vehicle data in one week, obtaining vehicle data in one month, or obtaining vehicle data in three months. The preset time period may be set according to an actual requirement. This is not specifically limited herein.

It may be understood that, when a vehicle state is a driving state, the obtained vehicle data is the driving data, and when the vehicle state is a charging state, the obtained vehicle data is non-driving data. In this embodiment, a user is classified based on the driving data. Therefore, the driving data in the preset time period needs to be screened out from the vehicle data according to the vehicle state.

Specifically, the electronic device 1000 may first obtain the vehicle data in the preset time period, where the vehicle data includes the driving time, the accumulated driving mileage, the vehicle state, and the driving speed; and the vehicle state includes the driving state and the charging state; and then obtain, based on the vehicle state, the driving data in the preset time period from the vehicle data.

In an example, a time interval for collecting the vehicle data may be 30 seconds.

Step 2200: To-be-analyzed data is obtained based on the driving data in the preset time period, where the to-be-analyzed data includes daily driving duration, a daily driving mileage, and a quantity of times of driving at each moment daily.

Specifically, after the electronic device obtains the driving data in the preset time period, daily driving data may be extracted from the driving data in the preset time period; and the daily driving data is calculated respectively, to obtain the daily driving duration, the daily driving mileage, and the quantity of times of driving at each moment daily in the preset time period.

For example, assuming that a user A drives a vehicle thrice on a day, driving for 1 hour at 8:00 in the morning, with a driving mileage of 5 kilometers; driving for 0.5 hours at 12:00 at noon, with a driving mileage of 2 kilometers; and driving for 2 hours at 12:45, with a driving mileage of 10 kilometers, daily driving duration obtained through calculation is 3.5 hours, a daily driving mileage is 17 kilometers, a quantity of times of driving at 8:00 is one, a quantity of times of driving at 12:00 is two, and a quantity of times of driving at other moments of the current day are all zero.

Step 2300: Analysis is performed on the to-be-analyzed data through a preset identification model, to obtain a user type.

Specifically, the electronic device 1000 may obtain a training sample set including preprocessed offline vehicle data; train the identification model based on the training sample set; and perform analysis on the to-be-analyzed data based on the preset identification model, to obtain a corresponding user type.

It may be understood that, after the analysis on the to-be-analyzed data is completed, the to-be-analyzed data and a corresponding analysis result may be updated to the training sample set as a training sample, so that the electronic device 1000 trains the identification model based on an updated training sample set, thereby optimizing the identification model.

In this embodiment, the preset identification model may be a Kmeans clustering model.

An identification result of the user type includes a daytime online car-hailing user type, a night online car-hailing user type, a commuting private vehicle user type, a commercial vehicle user type, and a non-commuting private vehicle user type.

Optionally, after analysis is performed on the to-be-analyzed data to obtain the user type, the electronic device 1000 may further separate, based on the user type, corresponding vehicle data of the user from the vehicle data; and perform visual analysis on the vehicle data of the user, to obtain a visual analysis result.

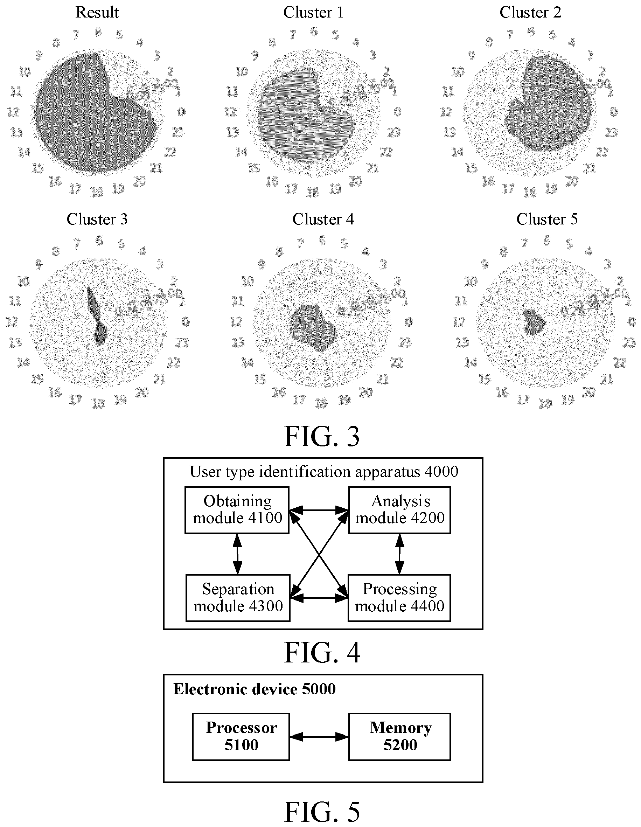

As shown in FIG. 3, a visual analysis result corresponding to a daytime online car-hailing user type is shown in a cluster 1, and features thereof are mainly characterized in that an average daily driving time and daily driving mileage are long, and a driving time period is fixed. A visual analysis result corresponding to the night online car-hailing user type is shown in a cluster 2, and features thereof are mainly characterized in that an average daily driving time and daily driving mileage are long, and a driving time period is fixed. A visual analysis result corresponding to the commuting private vehicle user type is shown in a cluster 3, and features thereof are mainly characterized in that a driving time period is concentrated on on-duty and off-duty time, and a driving mileage is fixed. A visual analysis result corresponding to the commercial vehicle user type is shown in a cluster 4, and features thereof are mainly characterized in that a driving time and a driving mileage are medium, and a driving time period is not fixed. A visual analysis result corresponding to the non-commuting private vehicle user type is shown in a cluster 5, and features thereof are mainly characterized in that a driving time and a driving mileage are short, and a driving time period is not fixed.

Optionally, after analysis is performed on the to-be-analyzed data to obtain the user type, the electronic device 1000 may further perform feature analysis on the vehicle data of the user, to obtain driving habit information of the user.

In this embodiment, after step 2300, the electronic device 1000 may further formulate a control strategy of a corresponding battery management system based on the user type. For example, estimation accuracy of a SOC may be adjusted.

In this technical solution in this embodiment, driving data in a preset time period is obtained, where the driving data includes at least a driving time, an accumulated driving mileage, and a driving speed in a vehicle driving process; to-be-analyzed data is obtained based on the driving data in the preset time period, where the to-be-analyzed data includes daily driving duration, a daily driving mileage, and a quantity of times of driving at each moment daily; and analysis is performed on the to-be-analyzed data through a preset identification model, to obtain a user type. In this embodiment, the user type is obtained by performing analysis on the daily driving duration, the daily driving mileage, and the quantity of times of driving at each moment daily. Because data used in a calculation process is not related to sensitive privacy data of a user, information security of the user can be improved when user classification is implemented.

### <Apparatus embodiment>

FIG. 4 is a schematic structural diagram of a user type identification apparatus according to an embodiment of the present disclosure. As shown in FIG. 4, a user type identification apparatus 4000 in this embodiment may include an obtaining module 4100 and an analysis module 4200.

The obtaining module 4100 is configured to obtain driving data in a preset time period, where the driving data includes at least a driving time, an accumulated driving mileage, and a driving speed in a vehicle driving process; and obtain to-be-analyzed data based on the driving data in the preset time period, where the to-be-analyzed data includes daily driving duration, a daily driving mileage, and a quantity of times of driving at each moment daily; and
the analysis module 4200 is configured to perform analysis on the to-be-analyzed data through a preset identification model, to obtain a user type.

An identification result of the user type includes a daytime online car-hailing user type, a night online car-hailing user type, a commuting private vehicle user type, a commercial vehicle user type, and a non-commuting private vehicle user type.

In this embodiment, the obtaining module 4100 is specifically configured to extract daily driving data from the driving data in the preset time period; and calculate the daily driving data respectively, to obtain the daily driving duration, the daily driving mileage, and the quantity of times of driving at each moment daily in the preset time period.

In this embodiment, the user type identification apparatus 4000 may further include a separation module 4300, configured to separate, based on the user type, corresponding vehicle data of a user from vehicle data; and the analysis module 4200 may be further configured to perform visual analysis on the vehicle data of the user, to obtain a visual analysis result.

In this embodiment, the analysis module 4200 may be further configured to perform feature analysis on the vehicle data of the user, to obtain driving habit information of the user.

In this embodiment, the user type identification apparatus 4000 may further include a processing module 4400, configured to formulate a control strategy of a corresponding battery management system based on the user type.

In this embodiment, the obtaining module 4100 is specifically configured to obtain a training sample set, where the training sample set includes preprocessed offline vehicle data; the user type identification apparatus 4000 may further include a training module, configured to train the identification model based on the training sample set; and the analysis module 4200 may be further configured to perform analysis on the to-be-analyzed data based on the identification model, to obtain the user type.

The user type identification apparatus in this embodiment may be configured to perform the technical solution of the foregoing method embodiment, and an implementation principle and technical effect thereof are similar. Details are not described herein again.

### <Electronic device embodiment>

In an embodiment, an electronic device 5000 is further provided.

As shown in FIG. 5, the electronic device 5000 may include a processor 5100 and a memory 5200. The memory 5200 is configured to store an executable instruction; and the processor 5100 is configured to run, based on control of an instruction, the electronic device 5000 to perform the user type identification method according to the embodiment described in FIG. 2.

### <Medium embodiment>

An embodiment of the present disclosure provides a computer-readable storage medium, storing a computer program. When executed by a processor, the computer program implements the user type identification method according to any one of the foregoing embodiments.

The present disclosure may be a system, a method, and/or a computer program product. The computer program product may include the computer-readable storage medium, and computer-readable program instructions are carried thereon for enabling a processor to implement various aspects of the present disclosure.

The computer-readable storage medium may be a tangible device that may retain and store an instruction for use by an instruction execution device. The computer-readable storage medium may be, for example, but is not limited to, an electronic storage device, a magnetic storage device, an optical storage device, an electromagnetic storage device, a semiconductor storage device, or any suitable combination thereof. A more specific example of the computer-readable storage medium (a non-exhaustive list) includes a portable computer disk, a hard disk, a random access memory (RAM), a read-only memory (ROM), an erasable programmable read-only memory (EPROM or a flash memory), a static random access memory (SRAM), a portable compression disk read-only memory (CD-ROM), a digital versatile disk (DVD), a memory stick, a floppy disk, a mechanical coding device, a punch card or in-groove bump structure, for example, having an instruction stored thereon, or any suitable combination thereof. The computer-readable storage medium used herein is not to be construed as an instantaneous signal itself, such as a radio wave or another freely propagating electromagnetic wave, an electromagnetic wave propagating through a waveguide or another transmission medium (for example, an optical pulse through an optical fiber cable), or an electrical signal transmitted through an electric wire.

The computer-readable program instructions described herein may be downloaded from the computer-readable storage medium to various computing/processing devices, or may be downloaded to an external computer or an external storage device through a network, such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives the computer-readable program instructions from the network, and forwards the computer-readable program instructions to be stored in the computer-readable storage medium in each computing/processing device.

The computer-readable program instructions configured to execute an operation of the present disclosure may be assembly instructions, instruction set architecture (ISA) instructions, machine instructions, machine-related instructions, microcode, firmware instructions, status setting data, or source code or target code written in any combination of one or more programming languages, where the programming languages include object-oriented programming languages, for example, Smalltalk and C++, and conventional procedural programming languages, for example, "C" languages or similar programming languages. The computer-readable program instructions may be completely executed on a user computer, partially executed on a user computer, executed as an independent software package, partially executed on a user computer and partially executed on a remote computer, or completely executed on a remote computer or a server. In a situation involving the remote computer, the remote computer may be connected to the user computer through any type of network, including the local area network (LAN) or the wide area network (WAN), or may be connected to the external computer (for example, connected via the Internet through an Internet service provider). In some embodiments, an electronic circuit, for example, a programmable logic circuit, a field programmable gate array (FPGA), or a programmable logic array (PLA) may be customized by using status information of the computer-readable program instructions, and the electronic circuit may execute the computer-readable program instructions, thereby implementing the various aspects of the present disclosure.

The various aspects of the present disclosure are described herein with reference to flowcharts and/or block diagrams of the method, the apparatus (system), and the computer program product according to the embodiments of the present disclosure. It should be understood that, each block of the flowcharts and/or block diagrams and a combination of blocks in the flowcharts and/or block diagrams both may be implemented by the computer-readable program instructions.

The computer-readable program instructions may be provided to a processor of a general purpose computer, a special purpose computer, or another programmable user type identification apparatus, to produce a machine, thereby enabling the instructions to generate, when executed by the processor of the computer or the another programmable user type identification apparatus, an apparatus implementing functions/actions specified in one or more blocks of the flowcharts and/or block diagrams. The computer-readable program instructions may further be stored in the computer-readable storage medium, and the instructions enable the computer, the programmable user type identification apparatus, and/or another device to operate in a particular manner, so that a computer-readable medium storing instructions includes an article of manufacture, and the article of manufacture includes instructions implementing various aspects of the functions/actions specified in the one or more blocks of the flowcharts and/or block diagrams.

The computer-readable program instructions may further be loaded onto the computer, the another programmable user type identification apparatus, or the another device, so that a series of operating steps are performed on the computer, the another programmable user type identification apparatus, or the another device, to generate a computer-implemented process, so that the instructions executed on the computer, the another programmable user type identification apparatus, or the another device implement the functions/actions specified in the one or more blocks of the flowcharts and/or block diagrams.

The flowcharts and block diagrams in the accompanying drawings illustrate architectures, functions, and operations that are possibly implemented by the system, the method, and the computer program product according to multiple embodiments of the present disclosure. In this regard, each block in the flowcharts or block diagrams may represent a module, program segment, or a part of an instruction, and the module, the program segment, or the part of instruction includes one or more executable instructions configured to implement a specified logical function. In some alternative implementations, functions marked in blocks may occur out of an order marked in the accompanying drawings. For example, two consecutive blocks may practically be executed substantially in parallel, and the two consecutive blocks may sometimes be executed in a reverse order. This depends upon an involved function. It should also be noted that, each block of the block diagrams and/or flowcharts and the combination of blocks in the block diagrams and/or flowcharts may be implemented using a dedicated hardware-based system that performs a specified function or action, or may be implemented using a combination of special purpose hardware and computer instructions. It is well known to a person skilled in the art that, implementations achieved through hardware, software, and a combination of software and hardware are equivalent.

Various embodiments of the present disclosure have been described above. The foregoing description is exemplary and not exhaustive, and is not limited to the disclosed embodiments. Without departing from the scope and spirit of the illustrated embodiments, many modifications and variations are apparent to a person of ordinary skill in the art. Terms used herein are intended to best explain principles of the various embodiments, practical applications, or technical improvement in the marketplace, or enable other persons of ordinary skill in the art to understand the embodiments disclosed herein. The scope of the present disclosure is defined by the appended claims.

## Claims

1. A user type identification method, comprising:
obtaining (2100) driving data in a preset time period, the driving data comprising at least a driving time and an accumulated driving mileage of a vehicle;
obtaining (2200) to-be-analyzed data based on the driving data in the preset time period, wherein the to-be-analyzed data comprises driving duration, a driving mileage, and a quantity of times of driving in each time period daily; and
performing analysis on the to-be-analyzed data through a preset identification model, to obtain (2300) a user type.

2. The method according to claim 1, wherein the obtaining to-be-analyzed data based on the driving data in the preset time period comprises:
extracting daily driving data from the driving data in the preset time period; and
calculating the daily driving data respectively, to obtain the driving duration, the driving mileage, and the quantity of times of driving in each time period daily.

3. The method according to claim 1 or 2, wherein an identification result of the user type comprises a daytime online car-hailing user type, a night online car-hailing user type, a commuting private vehicle user type, a commercial vehicle user type, and a non-commuting private vehicle user type.

4. The method according to any one of claims 1 to 3, further comprising:
performing visual analysis on vehicle data of a user based on the user type, to obtain a visual analysis result.

5. The method according to claim 4, wherein the vehicle data comprises the driving data when the vehicle is in a driving state and non-driving data when the vehicle is in a non-driving state.

6. The method according to claim 4 or 5, further comprising:
performing feature analysis on the vehicle data of the user, to obtain driving habit information of the user.

7. The method according to any one of claims 1 to 6, further comprising:
formulating a control strategy of a corresponding battery management system based on the user type.

8. The method according to any one of claims 1 to 7, wherein the performing analysis on the to-be-analyzed data through a preset identification model, to obtain a user type comprises:
obtaining a training sample set, the training sample set comprising preprocessed offline vehicle data;
training the identification model based on the training sample set; and
performing analysis on the to-be-analyzed data based on the identification model, to obtain the user type.

9. The method according to claim 8, further comprising:
updating the to-be-analyzed data and a corresponding analysis result to the training sample set as a training sample after performing analysis on the to-be-analyzed data.

10. A user type identification apparatus (4000), comprising:
an obtaining module (4100), configured to obtain driving data in a preset time period, the driving data comprising at least a driving time and an accumulated driving mileage of a vehicle; and obtain to-be-analyzed data based on the driving data in the preset time period, wherein the to-be-analyzed data comprises driving duration, a driving mileage, and a quantity of times of driving in each time period daily; and
an analysis module (4200), configured to perform analysis on the to-be-analyzed data through a preset identification model, to obtain a user type.

11. The identification apparatus (4000) according to claim 10, wherein the analysis module (4200) is further configured to perform visual analysis on vehicle data of a user, to obtain a visual analysis result.

12. The identification apparatus (4000) according to claim 10 or 11, wherein the analysis module (4200) is further configured to perform feature analysis on the vehicle data of the user, to obtain driving habit information of the user.

13. The identification apparatus (4000) according to any one of claims 10 to 12, further comprising:
a processing module (4400), configured to formulate a control strategy of a corresponding battery management system based on the user type.

14. The identification apparatus (4000) according to any one of claims 10 to 13, wherein the obtaining module (4100) is configured to:
obtain a training sample set, the training sample set comprising preprocessed offline vehicle data;
train the identification model based on the training sample set; and
perform analysis on the to-be-analyzed data based on the identification model, to obtain the user type.

15. An electronic device (5000), comprising a memory (5200) and a processor (5100), the memory (5200) being configured to store an executable instruction, and the processor (5100) being configured to execute the user type identification method according to any one of claims 1 to 9 under control of the instruction.

16. A readable storage medium, storing a computer program, the computer program, when executed by a processor, implementing the user type identification method according to any one of claims 1 to 9.
